Europäisches Patentamt

European Patent Office

Office européen des brevets

(19)

(11) Veröffentlichungsnummer: **0 000 953**
**A1**

(12) **EUROPÄISCHE PATENTANMELDUNG**

(21) Anmeldenummer: 78100778.6

(22) Anmeldetag: 29.08.78

(51) Int. Cl.²: **G 03 B 17/12, G 03 B 17/04,**
**G 03 B 17/56**

(30) Priorität: 27.08.77 DE 2738682

(43) Veröffentlichungstag der Anmeldung: 07.03.79
Patentblatt 79/5

(84) Benannte Vertragsstaaten: DE FR GB

(71) Anmelder: KODAK AKTIENGESELLSCHAFT,
Postfach 369, D-7000 Stuttgart-Wangen 60 (DE)

(72) Erfinder: Ort, Wolfgang, Daiberweg 6, D-7000
Stuttgart 50 (DE)
Erfinder: Reibl, Michael, Goldmühlestrasse 18, D-7032
Sindelfingen (DE)

(74) Vertreter: Lewandowsky, Klaus et al, Postfach 369,
D-7000 Stuttgart-Wangen 60 (DE)

(54) **Photographische Kamera mit einem als Handgriff dienenden aufklappbaren Deckel und einem Nahaufnahmevorsatz.**

(57) Bei einer photographischen Kamera (10) mit einem als Handgriff dienenden, aufklappbaren Deckel (20) ist ein Nahaufnahmevorsatz (30) mit einer Objektivlinse (40) und einem optischen Suchervorsatzglied (41) als flache Trägerplatte ausgebildet und zwischen der Kamerafrontseite (11) und der Innenfläche einer Seitenwand (21) des Deckels angeordnet. Dabei sind der Deckel und der Nahaufnahmevorsatz um eine gemeinsame Achse (26) verschwenkbar gelagert.

Eine Blattfeder (35) spannt den Nahaufnahmevorsatz gegen die Kamerafrontseite vor, so dass derselbe sich in seiner Gebrauchsstellung an der Kamerafrontseite abstützt und mittels Rastmittel (25, 37) gehalten ist. Zum Zwecke des Entfernens des vor dem Aufnahmeobjektiv liegenden Aufnahmevorsatzes wird der Deckel geschlossen. Dabei stützt sich eine Anschlagnase (32) des Nahaufnahmevorsatzes an einer am Deckel ausgebildeten Anschlagrippe federnd ab, und beim Öffnen des Deckels wird der Nahaufnahmevorsatz infolge des Reibkraftschlusses zwischen der Anschlagnase und der Anschlagrippe mitgenommen und im Deckel gehalten.

0000953

### Photographische Kamera mit einem als Handgriff dienenden aufklappbaren Deckel und einem Nahaufnahme- vorsatz

Die Erfindung betrifft eine photographische Kamera mit einem als Handgriff dienenden aufklappbaren Deckel und einem Nahaufnahmevorsatz, der eine Objektivvorsatzlinse und ein optisches Suchervorsatzglied aufweist.

Durch das DT-Gbm 7 344 472 ist eine, an eine weitgehend glattwandige Kamera bei Nahaufnahmen ansetzbare Einrichtung bekannt geworden, die als U-förmiger, in seinem Mittelteil die Objektivvorsatzlinse sowie das Suchervorsatzglied tragender, auf zwei sich gegenüberliegenden Kameragehäusewandungen klemmender Halter ausgebildet ist.

Nachteilig ist, daß zur Durchführung von Nahaufnahmen der Kamerabenutzer zusätzlich ein Zubehörteil mit sich führen muß, das leicht verloren gehen kann. Um eine Nahaufnahme zu machen, muß er dieses erst lagerichtig an der Kamera befestigen. Hierbei können dessen optische Glieder durch Fingerabdrücke verunreinigt werden. Auch besteht die Gefahr, daß die optischen Glieder beim losen Mitführen des Nahaufnahmevorsatzes in der Tasche verstauben oder beschädigt werden.

Durch die DT-OS 2 363 796 ist eine photographische Kamera mit einem im Kameragehäuse quer zum Aufnahmestrahlengang bewegbaren Träger für eine Nahlinse und eine Sucherkorrekturlinse bekannt, geworden. Mit dieser Kamera können Nahaufnahmen gemacht werden, ohne daß ein zusätzliches loses Nahaufnahmevorsatzteil mitgeführt und an die Kamerafrontseite angesetzt werden muß. Zur Durchführung einer Nahaufnahme werden lediglich durch Verschieben des Trägers die Nahlinse in den Aufnahmestrahlengang und gleichzeitig Korrekturlinse zum Ausgleich der Sucherparallaxe in den Sucherstrahlengang bewegt.

Diese Kamera, bei der ein präzise ausgebildeter und justierbarer Verschiebemechanismus für den Nahaufnahmevorsatz erforderlich ist, ist sehr teuer.

Aufgabe der Erfindung ist es, bei einer photographischen Kamera mit einem als Handgriff dienenden aufklappbaren Deckel eine einfache und preiswerte Nahaufnahmevorrichtung vorzusehen, die bequem mitgeführt und den optischen Gliedern der Kamera vorgeschaltet werden kann.

Gelöst wird diese Aufgabe erfindungsgemäß dadurch, daß der Nahaufnahmevorsatz aus einer flachen Trägerplatte besteht die zwischen der Kamerafrontseite und einer Deckelseitenwand angeordnet und mit dem Deckel um eine gemeinsame Achse verschwenkbar gelagert ist.

In einer vorteilhaften Ausgestaltung der Erfindung deckt die Träger platte die Kamerafrontseite im wesentlichen ab und kann am Kameragehäuse verrastet und mittels des Deckels entrastet werden.

Durch diese rastende Halterung des Nahaufnahmevorsatzes hinter der Deckelseitenwand wird er beim Aufklappen des Deckels mit diesem gemeinsam weggeschwenkt, wobei die Deckelseitenwand gleichzeitig als Schutzabdeckung für den Nahaufnahmevorsatz dient. Nur wenn eine Nahaufnahme gemacht werden soll, wird der Nahaufnahmevorsatz aus seiner Raststellung im Deckel gelöst und vor die Kamerafrontseite geschwenkt.

Durch diese Ausbildung des Gegenstands der Erfindung werden die Nachteile der beiden bekannten Kameras umgangen.

Weitere Merkmale und Vorteile der Erfindung sind der Beschreibung eines in der Zeichnung dargestellten Ausführungsbeispiels, sowie den Unteransprüchen zu entnehmen.

Es zeigen:

Fig. 1     eine photographische Kamera mit einem gemeinsam
mit dem als Handgriff dienenden Deckel abgeklappten Nahaufnahmevorsatz in einer perspektivischen Ansicht,

Fig. 2     die Kamera gemäß Fig. 1 mit in der Gebrauchslage
vor der Kamerafrontseite befindlichem Nahaufnahmevorsatz in einer perspektivischen Ansicht,

Fig. 3     die Kamera, den Deckel sowie den Nahaufnahmevorsatz in einer auseinandergezogen dargestellten,
perspektivischen Ansicht,

Fig. 4     ein Ausführungsbeispiel einer Schwenkachse von
Deckel und Nahaufnahmevorsatz,

Fig. 5     ein weiteres Ausführungsbeispiel einer Schwenkachse von Deckel und Nahaufnahmevorsatz,

Fig. 6     einen Teil der Kamera und des Nahaufnahmevorsatzes
gemäß Fig. 2 im Schnitt entlang der Linie I-I, und

Fig. 7     einen Teil der Kamera und des Nahaufnahmevorsatzes
gemäß Fig. 2, jedoch mit geschlossenem Deckel im
Schnitt entlang der Linie I-I.

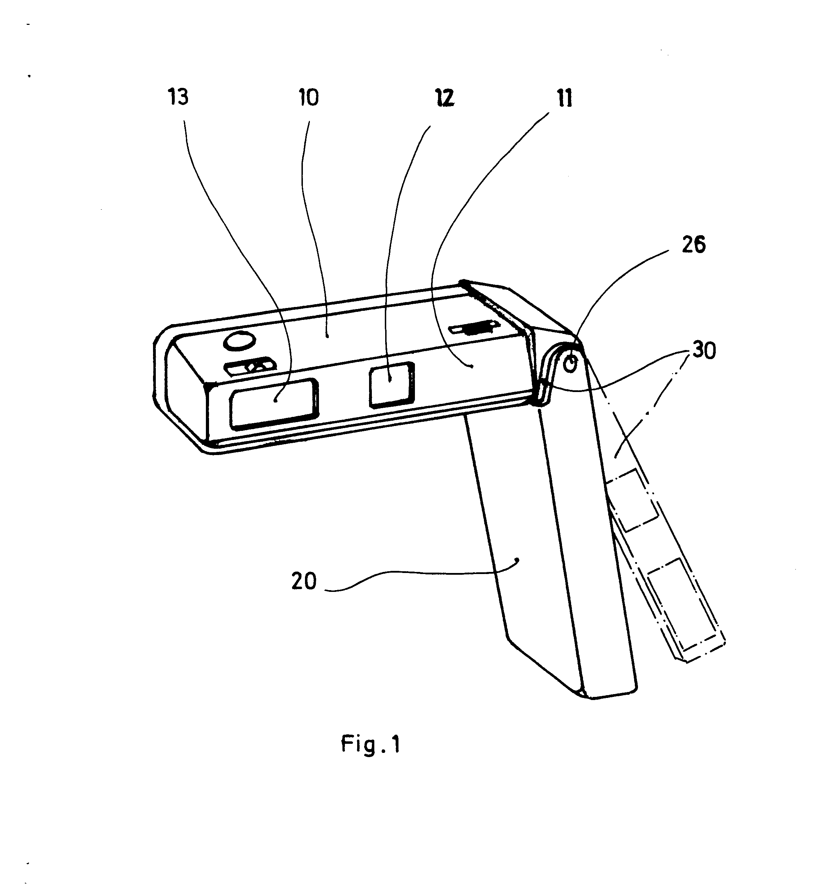

Die mit 10 bezeichnete Kamera flacher, quaderförmiger Bauart weis
an der schmalen Frontseite 11 die Öffnung 12 für das Aufnahmeobje
tiv und die Sucheröffnung 13 auf. Um eine gemeinsame Schwenkachse
26 (Fig. 1) ist ein als Handgriff dienender Deckel 20 und ein im
Bedarfsfall vor die Kamerafrontseite 11 bringbarer Nahaufnahmevorsatz 30 schwenkbar gelagert.

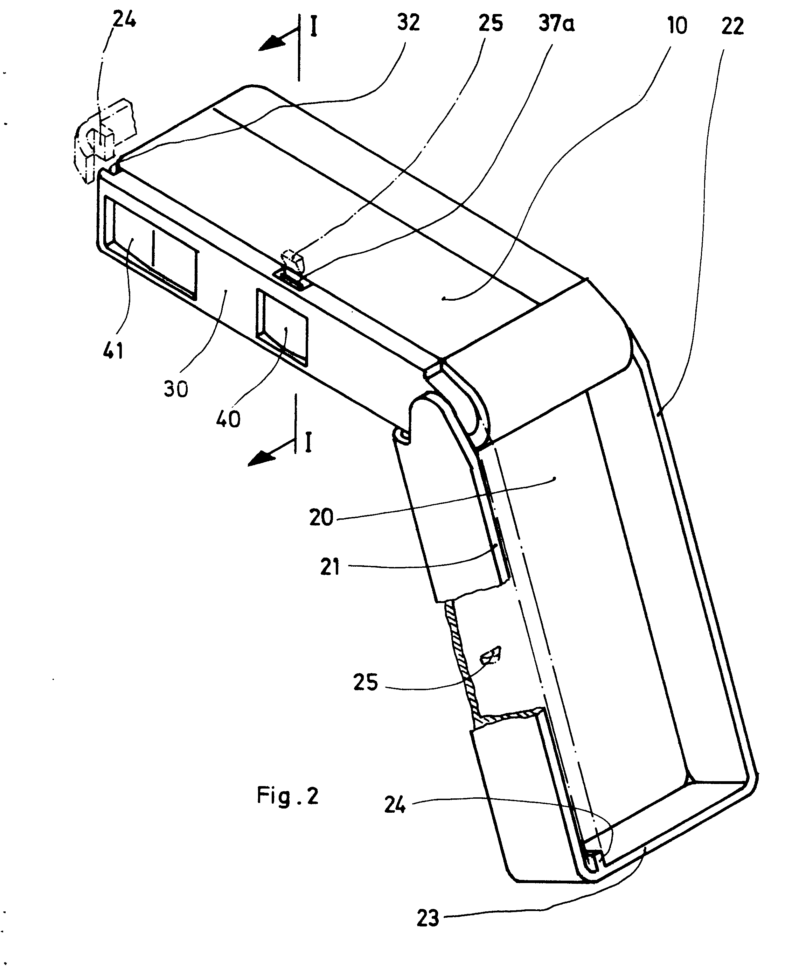

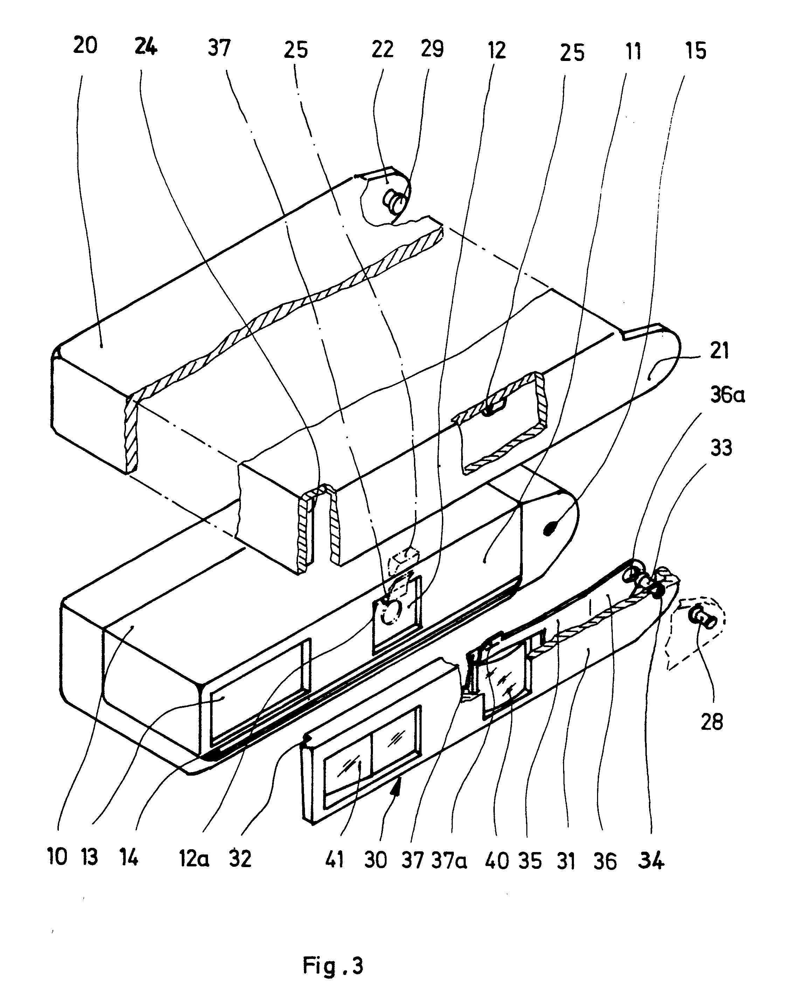

Wie die Fig. 2 und 3 zeigen, besteht der Nahaufnahmevorsatz 30 aus einer im wesentlichen die Kamerafrontseite 11 abdeckenden Trägerplatte 31, in der die Vorsatzlinse 40 und das optische Suchervorsatzglied 41 angeordnet sind. Der Nahaufnahmevorsatz weist, wie weiter unten noch näher beschrieben, Rast- und Haltemittel auf, die ihn sowohl an der Kamerafrontseite als auch innerhalb des Deckels 20 hinter dessen Seitenwand 21 in der Nichtgebrauchslage halten.

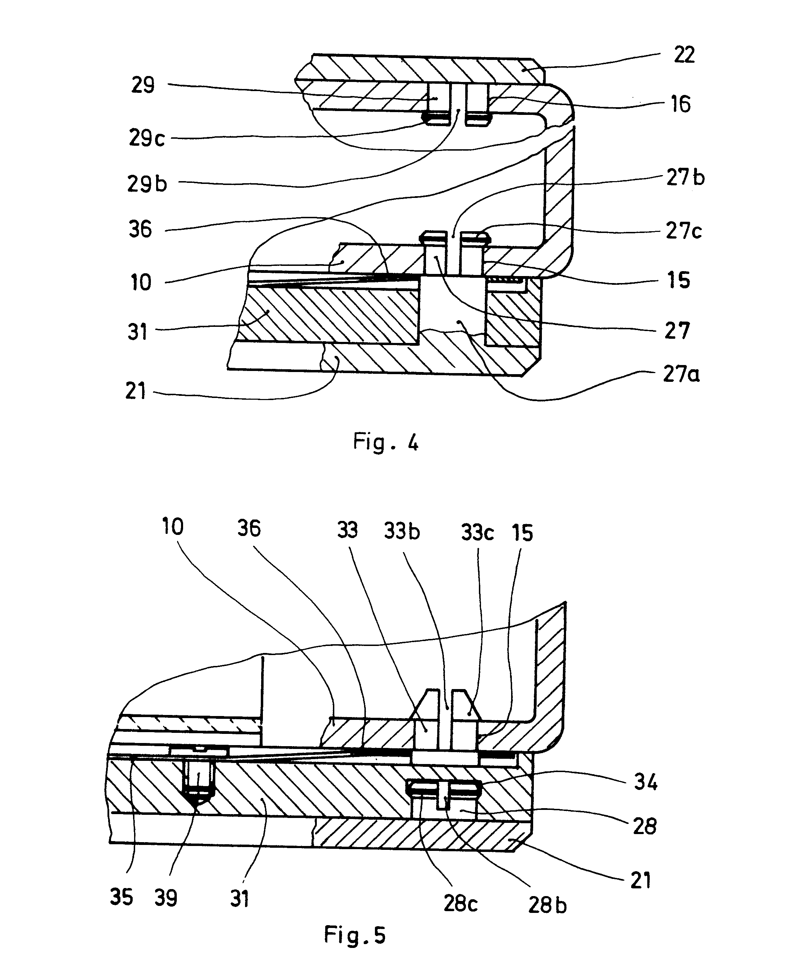

Statt einer gemeinsamen Schwenkachse 26 können auch an den Deckelseitenwänden 21 und 22 angeformte oder eingesetzte Gelenkzapfen 27 und 29 vorgesehen sein (Fig. 4). Diese greifen in Aussparungen 15 und 16 an der Kamerafront- und Rückseite ein. Sie weisen jeweils einen Schlitz 27b bzw. 29b und einen Ringwulst 27c bzw. 29c auf, und werden druckknopfartig in die kameraseitigen Aussparungen 15 und 16 eingeschnappt. Der an der vorderen Deckelseitenwand (21) befindliche Gelenkzapfen 27 weist einen Bund 27a auf, der zur Lagerung der Trägerplatte 31 dient.

In einem anhand der Fig. 3 und 5 gezeigten weiteren Ausführungsbeispiel auf das nunmehr im weiteren Verlauf der Beschreibung Bezug genommen wird, ist die Trägerplatte 31 mittels eines eigenen angeformten oder eingesetzten, ebenfalls mit einem Schlitz 33b und mit einer Ringwulst 33c versehenen Gelenkzapfens 33 direkt in der kameraseitigen Aussparung 15 schwenkbar gelagert. Gleichzeitig ist der Deckel 20 mittels eines an der Deckelseitenwand 21 angeformten oder eingesetzten, mit einem Schlitz 28b und einer Ringwulst 28c versehenen Gelenkzapfens 28 auf der Seite der Trägerplatte 31 in einer Aussparung 34 derselben gelagert.

Die Ausbildung des Nahaufnahmevorsatzes 30 insbesondere nach den Fig. 3 und 5 erlaubt ohne weiteres auch dessen nachträgliche Montage an die Kamera, sofern diese ohne Nahaufnahmevorsatz vom Kunden gekauft wurde. Bei der Nachrüstung der Kamera mit einem Nahaufnahmevorsatz wird lediglich der vorhandene Deckel, der um den Betrag der Dicke der Trägerplatte 31 des Nahaufnahmevorsatzes kleiner ist, gegen einen breiteren Deckel 20 ausgewechselt.

Auf der Rückseite der Trägerplatte 31 ist eine Blattfeder 35 eingelassen und dort im Bereich zwischen dem Gelenkzapfen 33 und der Vorsatzlinse 40 durch eine oder mehrere Schrauben 39 (Fig. 5 oder durch Kunststoffverschweißung befestigt. Die Blattfeder 35 weist im Bereich des Gelenkzapfens 33 einen abgewinkelten Federlappen 36 auf, der sich an der Kamerafrontseite 11 abstützt und die Trägerplatte 31 in der Gebrauchslage gegen die Kamerafrontseite 11 vorspannt. Der Federlappen 36 ist ferner mit einer Bohrung 36a für den freien Durchtritt des Gelenkzapfens 33 versehen.

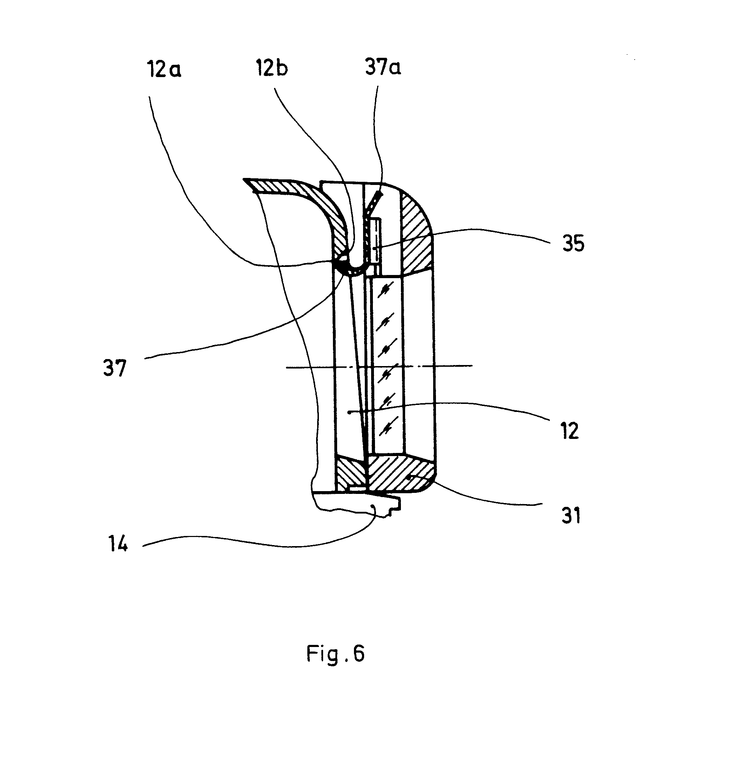

Wie anhand der Fig. 3 und 6 zu erkennen ist, liegt die Trägerplatte 31 in ihrer Gebrauchslage gleichzeitig auf einer die untere Randpartie des Kameragehäuses abschließenden Randleiste 14 auf, während ein oberhalb der Vorsatzlinse 40 verlaufender federnder Vorsprung 37 der Blattfeder 35 sich an der Oberkante 12a der kameragehäuseseitigen Öffnung 12 für das Aufnahmeobjektiv federnd abstützt. Die unter Vorspannung an der Kamerafrontseite 11 anliegde Trägerplatte 31 ist somit sicher zwischen der Randleiste 14 un der Oberkante 12a fixiert.

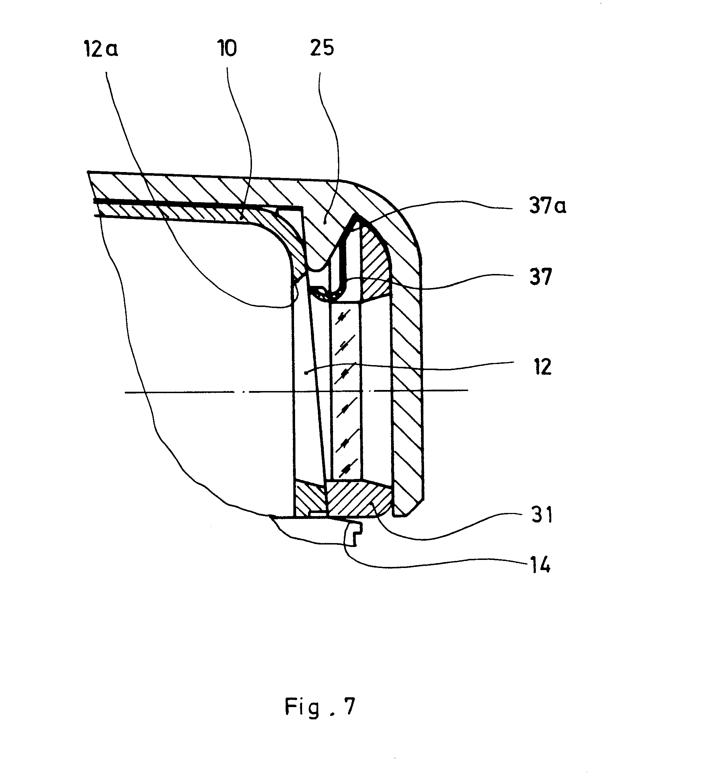

In der Schließstellung des Deckels 20 steht ein im Deckel 20 angeformter Nocken 25 mit einer Zunge 37a des federnden Vorsprungs 37 der Blattfeder 35 in Wirkverbindung und hält den federnden Vorsprung 37 außer Eingriff mit der Oberkante 12a der kameragehäuseseitigen Objektivöffnung 12 (Fig. 2, 3 und 7). Dadurch ist die Fixierung aufgehoben. Es bleibt jedoch die auf die Trägerplatte 3 einwirkende Vorspannkraft des im Bereich des Gelenkzapfens 33 an der Kamerafrontseite 11 sich abstützenden Federlappens 36 der Bla feder 35 weiterhin erhalten. Mittels dieser Vorspannkraft wird di Trägerplatte 31 bei geschlossenem Deckel 20 nunmehr gegen dessen Anschlagrippe 24 gehalten. (Vergl. Fig. 2 und 3). Damit die Träge platte 31 satt an der Anschlagrippe 24 anliegt, weist sie an ihre dem Gelenkzapfen 33 entgegengesetzten freien Ende eine stufenförm abgesetzte Anschlagnase 32 auf. Beim Aufklappen des Deckels 20 wi die Trägerplatte 31 und damit der in seiner Gesamtheit mit 30 bezeichnete Nahaufnahmevorsatz durch Friktion mitgenommen, so daß mit der Kamera Aufnahmen von außerhalb des Nahbereichs liegenden Objekten gemacht werden können.

Beabsichtigt der Kamerabenutzer jedoch eine Nahaufnahme zu machen, so wird der Nahaufnahmevorsatz 30 aus dem Deckel herausgeschwenkt und in die Gebrauchslage vor die Kamerafrontseite 11 gebracht, gegen die er sich unter Vorspannung anlegt. Hierbei gleitet der federnde Vorsprung 37 der Blattfeder 35 an einer an der Oberkante 12a der kameragehäuseseitigen Öffnung 12 befindlichen Fase 12b entlang, und schnappt auf die Oberkante 12a, um sich dort federnd abzustützen.

Soll der Nahaufnahmevorsatz wieder entfernt werden, so wird der Deckel 20 in seine Schließstellung gebracht, wobei der Nocken 25 den federnden Vorsprung 37 außer Eingriff mit der Oberkante 12a der kameragehäuseseitigen Öffnung 12 bringt. Beim anschließenden Aufklappen des Deckels 20 wird der Nahaufnahmevorsatz 30 über die Verbindung von Anschlagrippe 24 und Anschlagnase 32 mitgenommen.

Selbstverständlich ist auch ein Zurückschwenken des Nahaufnahmevorsatzes 30 in den Deckel 20 von Hand möglich, indem zuvor durch leichten Fingerdruck auf die Zunge 37a der federnde Vorsprung 37 außer Eingriff mit der Oberkante 12a der kameragehäuseseitigen Öffnung 12 gebracht wird.

K o d a k   Aktiengesellschaft

Postfach 369

7000 Stuttgart 60

1190/1198  Ja/dr

0000953

25. August 1978

## Patentansprüche

1. Photographische Kamera mit einem als Handgriff dienenden, aufklappbaren Deckel und einem Nahaufnahmevorsatz, der eine Objektivvorsatzlinse und ein optisches Suchervorsatzglied aufweist, **d a d u r c h   g e k e n n - z e i c h n e t** , daß der Nahaufnahmevorsatz (30) aus einer flachen Trägerplatte (31) besteht, die zwischen der Kamerafrontseite (11) und einer Deckelseitenwand (21) angeordnet und mit dem Deckel (20) um eine gemeinsame Achse (26) verschwenkbar gelagert ist.

2. Photographische Kamera nach Anspruch 1, dadurch gekennzeichnet, daß die Trägerplatte (31) die Kamerafrontseite im wesentlichen abdeckt und am Kameragehäuse verrastbar und mittels des Deckels entrastbar ist.

3. Photographische Kamera nach Anspruch 1, dadurch gekennzeichnet, daß die Trägerplatte (31) um einen Gelenkzapfen (27) für den Deckel (20) zwischen der Kamerafrontseite (11) und der Deckelseitenwand (21) schwenkbar und verrastbar gelagert ist.

4. Photographische Kamera nach Anspruch 1, dadurch gekennzeichnet, daß die Trägerplatte (31) um einen eigenen Gelenkzapfen (33) am Kameragehäuse zwischen der Kamerafrontseite (11) und der Deckelseitenwand (21) schwenkbar und verrastbar gelagert ist, und daß der Deckel (20) auf der Seite der Trägerplatte (31) in derselben gelagert ist.

5. Photographische Kamera nach den Ansprüchen 1 bis 3, dadurch gekennzeichnet, daß als Schwenkachse in Aussparungen (15, 16) an der Kamerafront- und Rückseite gehalterte, an den Deckelseitenwänden (21, 22) angeformte oder eingesetzte Gelenkzapfen (27, 29) vorgesehen sind, und daß der an der Kamerafrontseite angeordnete Gelenkzapfen (27) der Deckelseitenwand (21) einen Bund (27a) zur Lagerung des Nahaufnahmevorsatzes (30) aufweist. (Fig. 4).

6. Photographische Kamera nach den Ansprüchen 1 bis 3, dadurch gekennzeichnet, daß die Schwenkachse durch einen an der Trägerplatte (31) des Nahaufnahmevorsatzes (30) angeformten oder eingesetzten und in die Aussparung (15) an der Kamerafrontseite (11) eingreifenden Gelenkzapfen (33) sowie durch an den Deckelseitenwänden (21, 22) angeformte oder eingesetzte Gelenkzapfen (28, 29) gebildet wird, von denen der eine Gelenkzapfen (29) in die Aussparung (16) an der Kamerarückseite, und der andere Gelenkzapfen (28) in eine Aussparung (34) an der Trägerplatte (31) eingreift. (Fig. 3 und 5).

7. Photographische Kamera nach einem oder mehreren der vorhergehenden Ansprüche, dadurch gekennzeichnet, daß die Gelenkzapfen (27, 28, 29, 33) Schlitze (27b, 28b, 29b, 33b) und Ringwülste (27c, 28c, 29c, 33c) aufweisen und druckknopfartig in den Aussparungen (15, 16, 34) gehalten sind.

8. Photographische Kamera nach den Ansprüchen 1 bis 4, dadurch gekennzeichnet, daß an der Rückseite der Trägerplatte (31) eine von der Schwenkachse (26) oder von den Gelenkzapfen (27, 33) bis in den Bereich der Objektivvorsatzlinse (40) sich erstreckende, mit einem Rastmittel (37) versehenen Blattfeder (35) vorgesehen ist.

9.    Photographische Kamera nach den Ansprüchen 1 bis 4 und 8, dadurch gekennzeichnet, daß das der Schwenkachse (26) oder den Gelenkzapfen (27, 33) gegenüberliegende freie Ende der Trägerplatte (31) eine mit einer im Deckel (20) angeformten Anschlagrippe (24) zusammenwirkende Anschlagnase (32) aufweist.

10.   Photographische Kamera nach den Ansprüchen 1 bis 4 und 8, dadurch gekennzeichnet, daß die Blattfeder (35) im Bereich der Gelenkzapfen (27, 28, 33) einen an der Kamerafrontseite (11) sich abstützenden Federlappen (36) aufweist, der die Trägerplatte (31) in der Gebrauchslage gegen die Kamerafrontseite (11) und in der Nichtgebrauchslage gegen die Anschlagrippe (24) innerhalb des Deckels (20) vorspannt.

11.   Photographische Kamera nach den Ansprüchen 1 bis 4 und 8, dadurch gekennzeichnet, daß das Rastmittel der Blattfeder (35) als ein in der Gebrauchslage der Trägerplatte (31) an einer Kante (12a) der kameragehäuseseitigen Öffnung (12) für das Aufnahmeobjektiv sich abstützender federnder Vorsprung (37) ausgebildet ist.

12.   Photographische Kamera nach einem oder mehreren der vorhergehenden Ansprüche, dadurch gekennzeichnet, daß am Deckel (20) ein Nocken (25) vorgesehen ist, der in der Schließstellung des Deckels (20) den federnden Vorsprung (37) außer Eingriff mit der Kante (12a) der kameragehäuseseitigen Öffnung (12) hält.

13    10    12    11

26

30

20

Fig.1

Fig. 2

KODAK AG
STUTTGART

Fig.3

KODAK AG
STUTTGART

Fig. 4

Fig.5

KODAK AG
STUTTGART

12a    12b    37a

35

37

12

31

14

Fig.6

KODAK AG
STUTTGART

0000953

12a    10    25

37a

37

12

31

14

Fig . 7

KODAK AG
STUTTGART

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | FR - A - 2 281 588 (F. NIGGELOH)<br><br>* Seite 4, Zeilen 36-38; Seiten 5-7; Figuren 1-6 *<br><br>-- | 1 |
| DA | DE - A - 2 363 796 (MINOLTA CAMERA K.K.)<br><br>* Seiten 10-19; Figuren 1,2 *<br><br>-- | 1 |
| A | DE - A - 2 407 779 (MINOLTA CAMERA K.K.)<br><br>* Seiten 12-37; Figuren 1-4 *<br><br>-- | 1 |
| A | DE - A - 2 330 265 (KODAK A.G.)<br><br>* Seiten 3-6; Figuren 1,2 *<br><br>-- | 1 |
| A | DE - B - 1 077 526 (JENAOPTIK JENA G.m.b.H.)<br><br>* Spalten 2,3; Figur 1 *<br><br>---- | 1 |

**KLASSIFIKATION DER ANMELDUNG (Int.Cl.²)**

G 03 B 17/12
17/04
17/56

**RECHERCHIERTE SACHGEBIETE (Int. Cl.²)**

G 03 B 17/12
17/04
17/56
19/04
13/12

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-12-1978 | BOEYKENS |

EPA form 1503.1 06.78